# EUROPÄISCHE PATENTSCHRIFT

(11) **EP 1 436 494 B1**
(45) Veröffentlichungstag und Bekanntmachung des Hinweises auf die Patenterteilung: **28.06.2006**
(21) Anmeldenummer: 02758137.0
(22) Anmeldetag: 08.08.2002
(51) Int. Cl.: F02D 41/30, F02D 41/06

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 05.10.2001 DE 10149238
(43) Veröffentlichungstag der Anmeldung: 14.07.2004
(73) Patentinhaber: ROBERT BOSCH GMBH, 70442 Stuttgart (DE)
(72) Erfinder: GROSS, Jochen, 66606 St. Wendel (DE); LANGER, Winfried, 75428 Illingen (DE); KUFFERATH, Andreas, 71706 Markgroeningen (DE); KOEHLER, Christian, 74391 Erligheim (DE); HASSDENTEUFEL, Armin, 74343 Sachsenheim-Ochsenbach (DE)
(86) Internationale Anmeldenummer: PCT/DE2002/002919
(87) Internationale Veröffentlichungsnummer: WO 2003/031789

(56) Entgegenhaltungen:
- EP-A- 0 924 420
- EP-A- 1 081 364
- WO-A-00/42306
- WO-A-99/67523
- US-A- 5 078 107
- US-A1- 2001 013 329

## Beschreibung

### Stand der Technik

Die vorliegende Erfindung betrifft ein Verfahren zum Betreiben einer Brennkraftmaschine insbesondere eines Kraftfahrzeugs, bei dem Kraftstoff in einer ersten Betriebsart vorzugsweise zum Heizen eines Katalysators und in mindestens einer weiteren Betriebsart in einen. Brennraum eingespritzt wird, bei dem ein Regler die Brennkraftmaschine steuert/regelt, und bei dem zwischen den Betriebsarten umgeschaltet.wird.

Ferner betrifft die vorliegende Erfindung eine Brennkraftmaschine insbesondere für ein Kraftfahrzeug, bei der Kraftstoff in einer ersten Betriebsart vorzugsweise zum Heizen eines Katalysators und in mindestens einer weiteren Betriebsart in einen Brennraum einspritzbar ist, wobei die Brennkraftmaschine von einem Regler steuerbar/regelbar ist und zwischen den Betriebsarten umschaltbar ist.

Darüber hinaus betrifft die Erfindung ein Steuergerät für eine Brennkraftmaschine insbesondere eines Kraftfahrzeugs, bei der Kraftstoff in einer ersten Betriebsart vorzugsweise zum Heizen eines Katalysators und in mindestens einer weiteren Betriebsart in einen Brennraum einspritzbar ist, wobei die Brennkraftmaschine von einem Regler steuerbar/regelbar ist und zwischen den Betriebsarten umschaltbar ist.

Ein derartiges Verfahren/Steuergerät und eine derartige Brennkraftmaschine sind beispielsweise von einer sogenannten Benzin-Direkteinspritzung bekannt. Dort wird Kraftstoff in einem Homogenbetrieb während der Ansaugphase oder in einem Schichtbetrieb während der Verdichtungsphase in den Brennraum der Brennkraftmaschine eingespritzt.

Ebenfalls bekannt ist (siehe z.ß. EP 1 081 364 A2) eine kurz als "HOSP" bezeichnete Betriebsart der Brennkraftmaschine, insbesondere zur schnellen Aufheizung eines Katalysators, bei der die einzuspritzende Kraftstoffmasse auf zwei Einzeleinspritzungen aufgeteilt wird, wovon die erste in der Ansaugphase und die zweite in der Verdichtungsphase der Brennkraftmaschine erfolgt. Das Verhältnis aus der eingespritzten Kraftstoffmasse bei der zweiten Einspritzung zur insgesamt eingespritzten Kraftstoffmasse wird auch als Aufteilungsfaktor bezeichnet und beeinflußt das von der Brennkraftmaschine abgegebene Drehmoment.

Aufgabe der vorliegenden Erfindung ist es, ein Verfahren zum Betreiben einer Brennkraftmaschine dahingehend zu verbessern, dass die Umschaltung von/zu der Betriebsart "HOSP" möglichst drehmomentenneutral erfolgt, so dass sie für einen Fahrer eines Kraftfahrzeugs nicht wahrnehmbar ist.

Diese Aufgabe wird bei einem Verfahren der eingangs genannten Art erfindungsgemäß dadurch gelöst, dass bei dem Umschalten von/zu der ersten Betriebsart "HOSP" ein die erste Betriebsart "HOSP" charakterisierender Aufteilungsfaktor im Regler berücksichtigt wird.

Je nach gewähltem Aufteilungsfaktor weicht das Drehmoment der Brennkraftmaschine in der Betriebsart "HOSP" um bis zu 30% von dem Drehmoment ab, das die Brennkraftmaschine z.B. im Homogenbetrieb liefern kann. Die Berücksichtigung der Abhängigkeit des Drehmoments von dem Aufteilungsfaktor ermöglicht es, eine möglicherweise beim Umschalten von/zu der Betriebsart "HOSP" z.B. zu/aus dem Homogenbetrieb erfolgende Drehmomentänderung bereits vor dem Zeitpunkt des Umschaltens zu berechnen. Damit ist es möglich, bereits vor dem Umschalten neue Einspritzparameter und dergleichen zu berechnen, die zum Zeitpunkt des Umschaltens der Betriebsarten eingestellt werden, um die erwähnte Drehmomentänderung zu vermeiden.

Besonders vorteilhaft ist es, die Berücksichtigung des Aufteilungsfaktors erfindungsgemäß in einem Ist-Zweig und/oder in einem Soll-Zweig des Reglers der Brennkraftmaschine vorzunehmen, was den Rechenaufwand minimiert, da bestehende Drehmomentmodelle des Reglers benutzt werden können und eine Einbindung des Aufteilungsfaktors in die bereits vorhandene Drehmomentstruktur besonders einfach möglich ist.

Eine Ausführungsform des erfindungsgemäßen Verfahrens sieht vor, dass in dem Ist-Zweig des Reglers eine Drehmoment-Referenzgröße mit einem vom Aufteilungsfaktor abhängigen Aufteilungswirkungsgrad korrigiert wird. Der Ist-Zweig des Reglers dient u.a. zur Berechnung des Ist-Moments der Brennkraftmaschine, ausgehend von der Drehmoment-Referenzgröße, die auf einem Referenzzustand der Brennkraftmaschine beruht, welcher durch ein stöchiometrisches Luft-Kraftstoff-Gemisch sowie einen optimalen Zündwinkel gekennzeichnet ist.

Die erfindungsgemäße Korrektur der Drehmoment-Referenzgröße paßt die Drehmoment-Referenzgröße an die tatsächlichen, häufig vom Referenzzustand verschiedenen Verhältnisse an, so dass dem Regler abhängig vom Aufteilungsfaktor ein korrekter Wert für das Ist-Moment geliefert wird.

Sehr vorteilhaft ist auch eine erfindungsgemäße Verfahrensvariante, bei der in dem Soll-Zweig des Reglers eine Drehmoment-Sollgröße mit dem von dem Aufteilungsfaktor abhängigen Aufteilungswirkungsgrad korrigiert wird, so dass zur weiteren Berechnung z.B. einer von der Drehmoment-Sollgröße abhängigen einzuspritzenden Kraftstoffmenge auf den Referenzzustand bezogene Kennfelder verwendet werden können. Sehr zweckmäßig wird der Aufteilungswirkungsgrad aus einer Kennlinie/einem Kennfeld ermittelt..

Von besonderer Bedeutung ist die Realisierung des erfindungsgemäßen Verfahrens in der Form eines Computerprogramms, das für ein Steuergerät einer Brennkraftmaschine insbesondere eines Kraftfahrzeugs vorgesehen ist. Das Computerprogramm weist Programmcode auf, der dazu geeignet ist, das erfindungsgemäße Verfahren durchzuführen, wenn er auf einem Computer ausgeführt wird. Weiterhin kann der Programmcode auf einem computerlesbaren Datenträger gespeichert sein, beispielsweise auf einem sogenannten Flash-Memory. In diesen Fällen wird also die Erfindung durch das Computerprogramm realisiert, so dass dieses Computerprogramm in gleicher Weise die Erfindung darstellt wie das Verfahren, zu dessen Ausführung das Computerprogramm geeignet ist.

Als weitere Lösung der Aufgabe der vorliegenden Erfindung ist eine Brennkraftmaschine gemäß Anspruch 8 angegeben.
Noch eine Lösung der Aufgabe der vorliegenden Erfindung ist durch ein Steuergerät gemäß Anspruch 9 angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Fig.1: zeigt ein schematisches Blockschaltbild eines Ausführungsbeispiels einer erfindungsgemäßen Brennkraftmaschine,
- Fig. 2a: zeigt einen Ausschnitt aus dem Ist-Zweig des Reglers (21),
- Fig. 2b: zeigt einen Ausschnitt aus dem Soll-Zweig des Reglers (21).

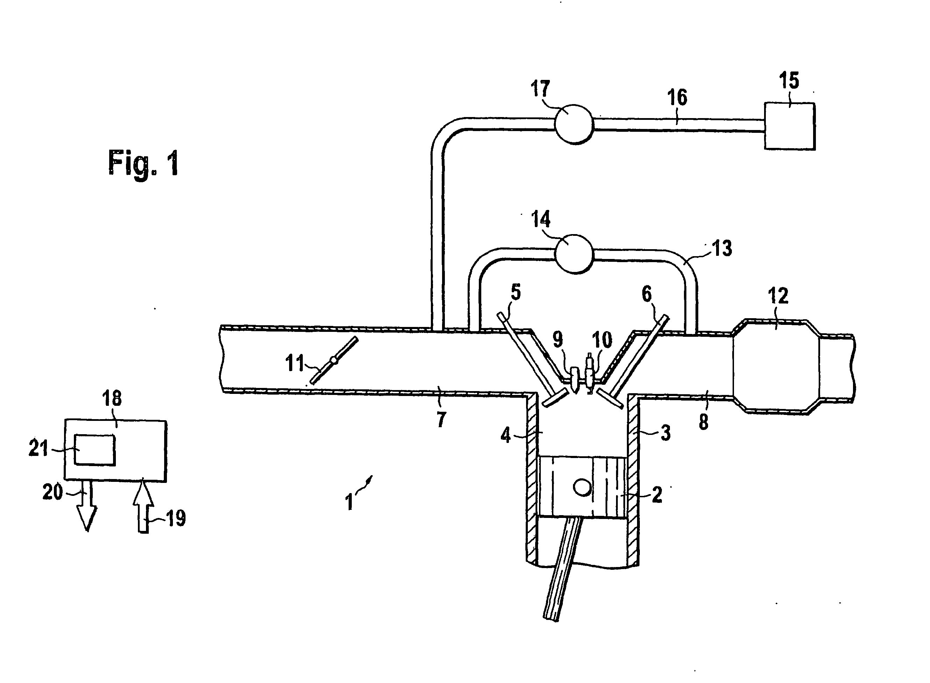

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung dar, durch die Verbrennung des Kraftstoffs entstehenden Abgase dient.

Von dem Abgasrohr 8 führt eine Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann.

Von einem Kraftstofftank 15 führt eine Tankentlüftungsleitung 16 zu dem Ansaugrohr 7. In der Tankentlüftungsleitung 16 ist ein Tankentlüftungsventil 17 untergebracht, mit dem die Menge des dem Ansaugrohr 7 zugeführten Kraftstoffdampfes aus dem Kraftstofftank 15 einstellbar ist.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren das Verhalten der Brennkraftmaschine 1 beeinflußt werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln, was durch den Regler 21 symbolisiert ist. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

In einer ersten Betriebsart, der sogenannten Betriebsart "HOSP", wird eine in den Brennraum 4 einzuspritzende Kraftstoffmasse auf zwei Einzeleinspritzungen aufgeteilt, wovon die erste in der Ansaugphase und die zweite in der Verdichtungsphase der Brennkraftmaschine 1 erfolgt. Auf diese Weise wird eine schnelle Erwärmung des Katalysators 12 bewirkt, was beispielsweise bei einem Kaltstart der Brennkraftmaschine 1 von Bedeutung ist. Das Verhältnis aus der eingespritzten Kraftstoffmasse bei der zweiten Einspritzung zur insgesamt eingespritzten Kraftstoffmasse wird als Aufteilungsfaktor bezeichnet.

In einer weiteren Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb im wesentlichen von der Stellung der Drosselklappe 11 ab. Im Hinblick auf eine geringe Schadstoffentwicklung wird das Kraftstoff/Luft-G.emisch möglichst auf Lambda = 1. oder Lambda < 1 eingestellt.

Zwischen den beschriebenen Betriebsarten der Brennkraftmaschine 1 kann hin- und her- bzw. umgeschaltet werden. Derartige Umschaltungen werden von dem Steuergerät 18 durchgeführt. Beispielsweise kann nach einem Kaltstart die erste Betriebsart, nämlich die Betriebsart "HOSP" eingestellt werden, mit der der Katalysator 12 schnell auf eine Betriebstemperatur erwärmt wird. Je nach Aufteilungsfaktor ist das Drehmoment der Brennkraftmaschine 1 in der Betriebsart "HOSP" um bis zu 30% geringer als im Homogenbetrieb.

Sobald der Katalysator 12 seine Betriebstemperatur erreicht hat, schaltet das Steuergerät 18 die Brennkraftmaschine 1 auf Homogenbetrieb um. Um eine momentenneutrale Umschaltung zu erzielen, wird der Einfluß des Aufteilungsfaktors auf das Drehmoment der Brennkraftmaschine 1 in der Betriebs art "HOSP" in der nachfolgend erläuterten Weise berücksichtigt.

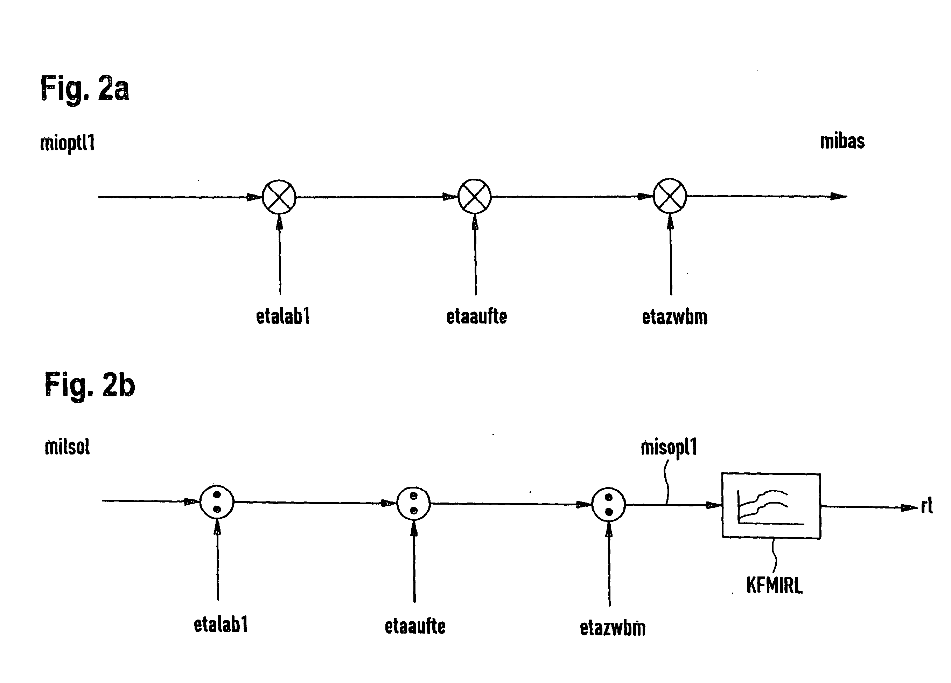

Figur 2a zeigt einen Ausschnitt aus dem Ist-Zweig des Reglers 21, der eingangsseitig eine Drehmoment-Referenzgröße mioptl1 aufweist. Diese Drehmoment-Referenzgröße mioptl1 stellt das maximale Drehmoment dar, das die Brennkraftmaschine 1 (Figur 1) liefern kann bei stöchiometrischem Luft-Kraftstoff-Gemisch, d.h. bei Larnbda=1, und bei optimal eingestelltem Zündwinkel. Die Drehmoment-Referenzgröße mioptll wird beispielsweise auf einem Prüfstand ermittelt und dient als Bezugsgröße für sämtliche im Regler 21 verwendeten Kennlinien/Kennfelder.

Ausgangsseitig weist der in Figur 2a gezeigte Ausschnitt das Ist-Moment mibas auf, das aus der Drehmoment-Referenzgröße mioptl1 berechnet wird.

Die Brennkraftmaschine 1 wird nicht immer mit Lambda = 1 und dem optimalen Zündwinkel betrieben, so dass das tatsächlich verfügbare Drehmoment, das Ist-Moment mibas, von der maximal möglichen Drehmoment-Referenzgröße mioptl1 abweicht. Diese Abweichung wird im Regler 21 rechnerisch berücksichtigt.

Dazu wird die Drehmoment-Referenzgröße mioptl1 zunächst mit einem Lambda-Wirkungsgrad etalab1 multipliziert, der angibt, wie sich das Drehmoment der Brennkraftmaschine 1 in Abhängigkeit von Lambda ändert. Falls Lambda = 1 gilt, ergibt sich für den Lambda-Wirkungsgrad etalab1 ein Wert von 100%. Entsprechend ergibt sich für einen Wert von Lambda <> 1, für den das Drehmoment der Brennkraftmaschine 1 beispielsweise nur 80% der Drehmoment-Referenzgröße beträgt, ein Lambda-Wirkungsgrad von 80%.

Analog dazu wird die Abhängigkeit des Drehmoments der Brennkraftmaschine 1 von dem Aufteilungsfaktor berücksichtigt, indem das Produkt aus dem Lambda-Wirkungsgrad etalab1 und der Drehmoment-Referenzgröße mioptl1 mit einem Aufteilungswirkungsgrad etaaufte multipliziert wird.

Der Aufteilungswirkungsgrad etaaufte gibt, analog zu etalabl, die Abhängigkeit des Drehmoments vom Aufteilüngsfaktor an und ist vorteilhafterweise in der Form einer Kennlinie im Steuergerät 18, vorzugsweise in einem wiederbeschreibbaren Speicher, wie z.B. einem Flash-Memory, abgelegt.

Untersuchungen haben ergeben, dass der Aufteilungswirkungsgrad etaaufte auch von der Drehzahl der Brennkraftmaschine 1 abhängt, so dass eine besonders genaue Berücksichtigung des Aufteilungsfaktors mit Hilfe eines Kennfeldes möglich ist, das neben dem Aufteilungsfaktor auch die Drehzahl enthält.

Schließlich erfolgt ein weiterer Multiplikationsschritt mit dem Zündwinkelwirkungsgrad etazwbm. Das sich ergebende Produkt stellt das Ist-Moment mibas dar, das von dem Regler 21 zur Steuerung/Regelung der Brennkraftmaschine 1 weiterverarbeitet wird.

Die Formulierung der Abhängigkeiten des Drehmoments von den Größen Lambda, Aufteilungsfaktor und Zündwinkel als Wirkungsgrad ist sehr vorteilhaft, weil dadurch eine multiplikative Verknüpfung der verschiedenen Einflußfaktoren möglich ist. Es ist also auch möglich, zunächst alle Wirkungsgrade miteinander zu multiplizieren, um einen Gesamtwirkungsgrad zu erhalten.

Figur 2b zeigt einen Ausschnitt aus dem Soll-Zweig des Reglers 21, an dessen Eingang ein z.B. aus einer Fahrpedalstellung abgeleitetes Fahrerwunschmoment milsol anliegt. Das Fahrerwunschmoment milsol ist nicht auf den Zustand Lambda = 1 bezogen und wird daher zur weiteren Verarbeitung im Soll-Zweig des Reglers 21 rechnerisch aufbereitet.

Das auf Lambda = 1 zurückgerechnete Soll-Drehmoment misopl1 wird, invers zur Berechnung des Ist-Moments mibas im Ist-Zweig, durch nacheinander erfolgende Division des Fahrerwunschmoments milsol durch den Lambda-Wirkungsgrad etalabl, den Aufteilungswirkungsgrad etaaufte und durch den Zündwinkelwirkungsgrad etazwbm erhalten.

Das Soll-Drehmoment misopl1 wird neben anderen Größen wie z.B. der Motordrehzahl (nicht gezeigt) einem Kennfeld KFMIRL zugeführt, das die Ausgangsgröße rl des in Figur 2b dargestellten Ausschnitts aus dem Soll-Zweig liefert.

Die Ausgangsgröße rl ist ein Maß für den Sollwert der relativen Luftfüllung des Brennraums 4, aus dem bei gegebenem Lambda die einzuspritzende Kraftstoffmenge ermittelt werden kann.

Die beschriebene Einbeziehung des Aufteilungswirkungsgrades etaaufte in dem Ist- und Soll-Zweig des Reglers 21 ermöglicht ein drehmomentenneutrales Umschalten von/zu der ersten Betriebsart "HOSP", indem das sich tatsächlich einstellende Drehmoment korrekt berechnet wird.

Neben dem Fahrkomfort wird durch das beschriebene Verfahren auch die Verkehrssicherheit enorm gesteigert. Besonders beim Umschalten von der ersten Betriebsart "HOSP" in den Homogenbetrieb, in dem die Brennkraftmaschine 1 üblicherweise ein um bis zu 30% größeres Drehmoment liefert, ist es wichtig, eine Drehmomentänderung zu vermeiden, um ein plötzliches unbeabsichtigtes Beschleunigen des Kraftfahrzeugs zu verhindern.

Obwohl die erste Betriebsart "HOSP" üblicherweise beim Kaltstart der Brennkraftmaschine 1 eingestellt wird, kann es vorkommen, dass auch nach längererer Betriebszeit nochmals beispielsweise vom Homogenbetrieb in die erste Betriebsart "HOSP" umgeschaltet wird, so dass die Berücksichtigung des Aufteilungsfaktors auch nach dem Kaltstart der Brennkraftmaschine 1 von Vorteil ist.

## Patentansprüche

1. Verfahren zum Betreiben einer Brennkraftmaschine (1) bei dem Kraftstoff in einer ersten Betriebsart eingespritzt wird, wobei in der ersten Betriebsart der einzuspritzende Kraftstoff auf zwei Einzeleinspritzungen aufgeteilt wird, wovon die erste in einer Ansaugphase und die zweite in einer Verdichtungsphase der Brennkraftmaschine (1) eingespritzt wird, bei dem Kraftstoff in mindestens einer weiteren Betriebsart in den Brennraum (4) eingespritzt wird, wobei in der weiteren Betriebsart der Kraftstoff in der Ansaugphase der Brennkraftmaschine (1) eingespritzt wird, bei dem ein Regler (21) die Brennkraftmaschine (1) steuert/regelt, und bei dem zwischen den Betriebsarten umgeschaltet wird, wobei bei dem Umschalten von/zu der ersten Betriebsart ein die erste Betriebsart charakterisierender Aufteilungsfaktor im Regler (21) berücksichtigt wird, **dadurch gekennzeichnet, dass** der Aufteilungsfaktor das Verhältnis aus dem eingespritzten Kraftstoff bei der zweiten Einspritzung zum insgesamt eingespritzten Kraftstoff angibt, und dass in einem Soll-Zweig des Reglers (21) eine Drehmoment-Sollgröße (milsol) mit einem von dem Aufteilungsfaktor abhängigen Aufteilungswirkungsgrad (etaaufte) korrigiert wird.

2. verfahren nach Anspruch 1, **dadurch gekennzeichnet, dass** In einem Ist-Zweig des Reglers (21) eine Drehmoment-Referenzgröße (mioptil) mit dem Aufteilungswirkungsgrad (etaaufte) korrigiert wird.

3. Verfahren nach einem der Ansprüche 1 oder 2, **dadurch gekennzeichnet, dass** der Aufteilungswirkungsgrad (etaaufte) aus einer Kennlinie/einem Kennfeld ermittelt wird.

4. Computerprcgramm für ein Steuergerät (18) einer Brennkraftmaschine (1) insbesondere eines Kraftfahrzeugs, mit Programmcode, der dazu programmiert ist, das Verfahren nach einem der Ansprüche 1 bis 3 durchzuführen, wenn er auf einem Computer ausgeführt wird.

5. Computerprogramm nach Anspruch 4, wobei der Programmcode auf einem computerlesbaren Datenträger gespeichert ist.

6. Steuergerät (18) für eine Brennkraftmaschine (1) insbesondere eines Kraftfahrzeugs mit Mitteln zur Ausführung des Verfahrens nach einem der Ansprüche 1 bis 3.

7. Brennkraftmaschine (1) insbesondere für ein Kraftfahrzeug mit einem Steuergerät (18), das dazu hergerichtet ist, das Verfahren nach einem der Ansprüche 1 bis 3 auszuführen.

## Claims

1. Method for operating an internal combustion engine (1), in which fuel is injected in a first operating mode, in which first operating mode the fuel to be injected is divided into two individual injections, the first of which is injected in an induction phase of the internal combustion engine (1) and the second of which is injected in a compression phase of the internal combustion engine (1), in which fuel is injected into the combustion chamber (4) in at least one further operating mode, in which further operating mode the fuel is injected in the induction phase of the internal combustion engine (1), in which a controller (21) controls the internal combustion engine (1), and in which the internal combustion engine is switched between the operating modes, wherein when the internal combustion engine is being switched from/to the first operating mode, a division factor which characterizes the first operating mode is taken into account in the controller (21), **characterized in that** the division factor indicates the ratio of the fuel injected in the second injection to the total amount of fuel injected, and **in that** in a setpoint branch of the controller (21) a setpoint torque variable (milsol) is corrected using a division efficiency (etaaufte) that is dependent on the division factor.

2. Method according to Claim 1, **characterized in that** in an actual branch of the controller (21) a reference torque variable (mioptil) is corrected using the division efficiency (etaaufte).

3. Method according to either of Claims 1 and 2, **characterized in that** the division efficiency (etaaufte) is determined from a characteristic curve/characteristic diagram.

4. Computer program for a control unit (18) of an internal combustion engine (1) in particular of a motor vehicle, having program code which is programmed to carry out the method according to one of Claims 1 to 3 when it is executed on a computer.

5. Computer program according to Claim 4, in which the program code is stored on a computer-readable data carrier.

6. Control unit (18) for an internal combustion engine (1) in particular of a motor vehicle, having means for executing the method according to one of Claims 1 to 3.

7. Internal combustion engine (1) in particular for a motor vehicle, having a control unit (18) which is designed to execute the method according to one of Claims 1 to 3.

## Revendications

1. Procédé de fonctionnement d'un moteur à combustion interne (1), selon lequel
- on répartit le carburant est injecté dans un premier mode de fonctionnement, en deux injections individuelles dont la première est injectée dans une phase d'admission et la deuxième dans une phase de compression du moteur à combustion interne (1),
- on injecte le carburant, dans la chambre de combustion (4) dans au moins un autre mode de fonctionnement, pendant la phase d'admission du moteur à combustion interne (1),
- un régulateur (21) commande/régule le moteur à combustion interne (1), et
- on passe d'un mode de fonctionnement à l'autre en tenant compte d'un facteur de répartition caractéristique du premier mode de fonctionnement dans le régulateur (21) lors du passage du/au premier mode de fonctionnement,
**caractérisé en ce que**
le facteur de répartition indique le rapport entre le carburant injecté lors de la deuxième injection et le carburant injecté en totalité, et
dans une branche de consigne du régulateur (21), une grandeur de consigne du couple (milsol) est corrigée à l'aide d'un rendement de répartition (etaaufte) dépendant du facteur de répartition.

2. Procédé selon la revendication 1,
**caractérisé en ce que**
dans une branche réelle du régulateur (21), une grandeur de référence du couple (mioptil) est corrigée à l'aide du rendement de répartition (etaaufte).

3. Procédé selon l'une des revendications 1 ou 2,
**caractérisé en ce que**
le rendement de répartition (etaaufte) est déterminé à l'aide d'une courbe caractéristique/d'un diagramme caractéristique.

4. Programme informatique pour un appareil de commande (18) d'un moteur à combustion interne (1), en particulier d'un véhicule automobile, comprenant un code de programme programmé pour mettre en oeuvre le procédé selon l'une des revendications 1 à 3 lorsqu'il est exécuté sur un ordinateur.

5. Programme informatique selon la revendication 4,
le code de programme étant stocké sur un support de données lisible sur un ordinateur.

6. Appareil de commande (18) pour un moteur à combustion interne (1), en particulier d'un véhicule automobile, comprenant des moyens permettant de mettre en oeuvre le procédé selon l'une des revendications 1 à 3.

7. Moteur à combustion interne (1), en particulier pour un véhicule automobile, comprenant un appareil de commande (18) conçu pour mettre en oeuvre le procédé selon l'une des revendications 1 à 3.
